# EUROPEAN PATENT APPLICATION

(11) **EP 4 678 423 A1**
(43) Date of publication of application: **14.01.2026**
(21) Application number: 25188073.8
(22) Date of filing: 08.07.2025
(51) Int. Cl.: B60C 19/00, B60C 13/00, B60C 15/06, G06K 19/077, H01Q 1/22

(54) **PNEUMATIC TYRE AND PNEUMATIC TYRE AND RIM ASSEMBLY**

(30) Priority: 08.07.2024 LU 507696
(71) Applicant: Apollo Tyres Global R&D B.V., 7521 PT Enschede (NL)
(72) Inventor: Drummond, Paulo, 7521PT Enschede (NL); Himanshu, Arora, 7521PT Enschede (NL)
(74) Representative: Michalski Hüttermann & Partner Patentanwälte mbB

(57) **Abstract**

It is provided a relates to a tyre comprising a RFID device where a transponder (14) having a radially outer end (17) facing the tread (7) and a radially inner end (18) facing the bead core (5) and an axially inner surface facing the body ply (3) and an axially outer surface facing the sidewall (11) or the rim cushion (12) in radial tyre direction is located between the end (15) of the body ply (3) and the bead core (5) and in tyre axial direction is arranged between the turned-up portion (3a) of the body ply (3) and the sidewall (11) or the rim cushion (12), wherein a first radial distance (D1) of more than 3 mm is provided between the radially outer end (17) of the transponder (14) and the end (15) of the body ply (3), and a second radial distance (D2T) of at least 14.1 mm is provided between the radially inner end (18) of the transponder (14) and a radial height (H) corresponding to the radial innermost portion of a rim seating of the tyre. Further is provided a pneumatic tyre and rim assembly.

## Description

The present invention relates to a pneumatic tyre and a pneumatic tyre and rim assembly comprising a RFID device, and further to a method for building a tyre.

Radio-Frequency Identification (RFID) is a technology that uses radio waves to transfer data between a scanner/reader and a tag/chip. The RFID reader transmits an encoded radio signal that activates the passive tag, receiving back a previously specified set of data. Using RFID, tyre tracking becomes an efficient tool, including data transmission from production, logistics, management and vehicle connectivity. This technology is an improvement to the use of barcodes, in terms of readability where RFID device are usable in greater distance, no line of sight is required, and the read rate is higher, further providing higher security based on encrypted data and more durability, as RFID devices are not easily removed or compromised.

Several solutions are described in the prior art. EP 2 186 658 A1, for example, describes a tire and electronic device assembly comprising an electronic device including a transponder tag that is operably mounted to the tire in a position between an apex component positioned above a bead and the sidewall or at a distance above the ply ending wrapped around the bead and perpendicular to the parallel cords in the ply layer.

DE 11 2020 004 964 T5 describes a pneumatic tire including a transponder extending along a circumferential direction embedded between a position (P1) located on an outer side of and 15 mm away from an upper end of a bead core in a radial direction and a position (P2) located on an inner side of and 5 mm away from an end of a belt layer in the radial direction.

However, embedding RFID devices in a tyre should not cause premature tyre failure. It is thus an object to provide a pneumatic tyre capable of improving the durability of the tyre while ensuring the communication performance of a transponder.

This object is achieved by a pneumatic tyre according to claim 1 and a pneumatic tyre and rim assembly according to claim 7. Advantageous embodiments are the subject of the dependent claims. They may be combined freely unless the context clearly indicates otherwise.

Accordingly, a pneumatic tyre for mounting on a rim is provided, wherein the tyre comprises:
an annular tread extending in a tyre circumferential direction,
a pair of annular beads, each of which has a bead core and a bead filler,
a pair of sidewalls extending between the tread and the beads,
a carcass extending between the pair of beads, the carcass comprising at least one body ply which body ply at each end portion is turned up around the respective bead thereby forming a laterally turned-up portion extending radially until an end of the body ply,
a rim cushion that is arranged externally to the body ply and is provided in a portion where the bead comes into contact with the rim.

A transponder having a radially outer end facing the tread and a radially inner end facing the bead core and an axially inner surface facing the body ply and an axially outer surface facing the sidewall or the rim cushion in radial tyre direction is located between the end of the body ply and the bead core and in tyre axial direction is arranged between the turned-up portion of the body ply and the sidewall or the rim cushion, wherein a first radial distance (D1) of at least 3 mm is provided between the radially outer end of the transponder and the end of the body ply, and a second radial distance (D2T) of at least 14.1 mm is provided between the radially inner end of the transponder and a radial height (H) corresponding to the radial innermost portion of a rim seating of the tyre.

The positioning in the tyre radial direction, between bead core and the medium portion of the section height, provides low displacement, while the positioning at the second radial distance (D2T) contributes to the radio-frequency signal spreading.

Within the meaning of the invention, the term "transponder" refers to a Radio-Frequency Identification (RFID) device, which usually also is denoted "RFID transponder", "RFID tag" or simply "tag".

Within the meaning of the invention, the nominal load and nominal inflation pressure as well as the standard rim are defined according to the European Tire and Rim Technical Organization (ETRTO) standard ETRTO 2023 regulations. The standard rim is the "Measuring Rim" as defined in the ETRTO standards. The "nominal inflation pressure" is the "Inflation Pressure" as defined in the ETRTO standards. The "nominal load" is the "Standard Load" as defined in the ETRTO standards.

As used herein, the term "axial" and "axially" refers to directions that are parallel to the axis of rotation of the tire. As used herein, the term "radial" and "radially" refers to directions radially toward or away from the axis of rotation of the tire. As used herein, the term "circumferential" refers to directions extending along the perimeter of the surface of the annular tread perpendicular to the axial direction. As used herein, the term "lateral" refers to an axial direction. As used herein, the term "inner side" refers to the side of the tyre near a vehicle when the tyre is mounted on a wheel and the wheel is mounted on the vehicle. As used herein, the term "outer side" refers to the side of the tire away from a vehicle when the tyre is mounted on a wheel and the wheel is mounted on the vehicle.

The radial height (H) as defined for the tyre corresponds to the radial innermost portion of the rim seating of the tyre and also corresponds or at least essentially corresponds to the diameter D of the rim, preferably a standard rim defined according to the ETRTO 2023 standard or the US Tire Manufacturers Association (US TMA) standard, to which the tyre will be fitted to. Thus, the radial height (H) is the height of a surface in a radial plane that refers to an interface surface of tyre and rim when the tyre is mounted on a rim.

In embodiments, the first radial distance (D1) between the radially outer end of the transponder and the end of the body ply is at least 3 mm and the second radial distance (D2T) between the radially inner end of the transponder and the radial height (H) is at least 17.3 mm.

In embodiments, a distance or offset of at least 3 mm is provided between radially inner and outer ends of the transponder and an adjacent tyre component, such as the turned-up end of the body ply, or the radially outer end of the rim cushion.

In embodiments, the turned-up portion of the body ply radially terminates below the tread ply in such a way that the end of the body ply is below the tread ply.

Optionally, the transponder in axial tyre direction on its axially inner side abuts and is in direct contact with the body ply.

In an embodiment, the transponder in axial tyre direction on its axially inner side abuts and is in direct contact with the body ply and optionally also on its axially outer side abuts and is in direct contact with the sidewall. In other words, the transponder in this position is embedded between the carcass turn-up and the sidewall around the medium portion of the section height. This position allows the transponder to be placed in a lower deflexion zone of the sidewall, providing a good stability for the transponder, in a low deflexion region. This position further contributes to transponder readability being further away from the metal parts of the bead core.

In these embodiments, the first radial distance (D1) between the radially outer end of the transponder and the end of the body ply is in a range of from 3 mm to 10 mm, preferably in a range of from 5 mm to 10 mm. In these embodiments, the second radial distance (D2T) between the radially inner end of the transponder and the radial height (H) is in a range of from 14.1 mm to 65 mm, preferably in a range of from 17.3 mm to 65 mm, more preferably in a range of from 30 mm to 65 mm.

In another embodiment, the transponder in axial tyre direction on its axially inner side abuts and is in direct contact with the body ply and optionally also on its axially outer side abuts and is in direct contact with the rim cushion. In other words, the transponder in this position is embedded between the carcass turn-up and the rim cushion, preferably below the apex tip. This position guarantees a very stiff region of the tyre, with lowest displacements as possible, providing good transponder stability and tyre integrity.

In such embodiments, the first radial distance (D1) between the radially outer end of the transponder and the end of the body ply is in a range of from 3 mm to 38 mm, preferably in a range of from 5 mm to 38 mm. In such embodiments, the second radial distance (D2T) between the radially inner end of the transponder and the radial height (H) is in a range of from 14.1 mm to 50 mm, preferably in a range of from 17.3 mm to 35 mm.

In embodiments, at least one additional reinforcing layer is arranged at least between the turned-up portion of the body ply and the body ply. In embodiments, one, two or more reinforcing layers can be arranged between the turned-up portion of the body ply and the body ply. The reinforcing layer may be a rubber layer. In embodiments, the reinforcing layer may comprise a rubber component layer and a textile reinforcing layer. In embodiments, the reinforcing layer may be a reinforcing body ply. The reinforcing layer provides for improved rigidity in the region of the turned-up portion of the body ply. This advantageously provides for less delamination failure and improves signal strength.

In embodiments, the transponder is arranged between a first and a second coating layer. The transponder in embodiments is arranged so as to be contained in a sandwich-like manner between first and a second outer rubber coating layers. First and a second outer rubber coating layers on the axially inner and outer surfaces may result in the transponder being completely or nearly completely surrounded by coating layers. The material of the coating layer may be a rubber component, optionally the rubber material of the belt compound. Such a rubber coating layer provides improved compatibility of the transponder with the surrounding tyre components, such as the sidewall rubber, the rim cushion rubber or the ply rubber component. The transponder being protected by the coating layer, allows the durability of the transponder to be improved. Such a coated transponder usually is referred to as a "pouch". Optionally the transponder is assembled on a support layer and the transponder assembly of transponder and support layer is arranged between first and second coating layers. The support layer may be a mesh having a textile component. The support layer will improve the stability of the transponder assembly.

Advantageously, the positioning of the transponders allows for an easy and straightforward implementation as an industrialized process. A first tyre building step may comprise a pre-assembly step for the transponders before placement on the building drum. During the pre-assembly step the transponder may be positioned on a surface of a rim cushion and sidewall assembly in contact with an inner surface of the sidewall or the rim cushion facing the body ply. Particularly, during a first building step of the tyre the transponders may be placed directly on the building drum on a pre-assembly structure comprising innerliner, sidewall, and rim cushion members.

According to a further aspect is provided a pneumatic tyre and rim assembly comprising:
a tyre mounted on a rim, wherein
the rim has a rim seating having a diameter D and a dimension G of a rim contour measured radially from the rim seating to an outer edge of a rim flange, and wherein
the tyre comprises
an annular tread extending in a tyre circumferential direction,
a pair of annular beads, each of which has a bead core and a bead filler,
a pair of sidewalls extending between the tread and the beads,
a carcass extending between the pair of beads, the carcass comprising at least one body ply which body ply at each end portion is turned up around the respective bead thereby forming a laterally turned-up portion extending radially until an end of the body ply,
a rim cushion that is arranged externally to the body ply and is provided in a portion where the bead comes into contact with the rim,
wherein
a transponder having a radially outer end facing the tread and a radially inner end facing the bead core and an axially inner surface facing the body ply and an axially outer surface facing the sidewall or the rim cushion in radial tyre direction is located between the end of the body ply and the bead core and in tyre axial direction is arranged between the turned-up portion of the body ply and the sidewall or the rim cushion, wherein
a first radial distance (D 1) of at least 3 mm is provided between the radially outer end of the transponder and the end of the body ply, and
a second radial distance (D2) of more than 0 mm is provided between the radially inner end of the transponder and the outer edge of the rim flange, when the tyre is mounted on the rim under nominal load and with nominal inflation pressure.

In this aspect, the positioning of the transponder is defined in view of the tyre that is mounted on a rim, i.e. in the pneumatic tyre and rim assembly. The positioning in the tyre radial direction, between bead core and the medium portion of the section height, provides low displacement, while the positioning above the rim flange contributes to the radio-frequency signal spreading. Advantageously, a positioning above the bead seat of the rim can avoid signal attenuation due to the presence of metals.

A rim being a standard rim in accordance with the ETRTO standard 2023 or the US Tire Manufacturers Association (US TMA) standard has a rim seating having a diameter D and a dimension G of a rim contour hat is measured radially from the rim seating to an outer edge of a rim flange according to the ETRTO 2023 standard or the US TMA standard.

In embodiments, the first radial distance (D1) between the radially outer end of the transponder and the end of the body ply is at least 3 mm and the second radial distance (D2) between the radially inner end of the transponder and the outer edge of the rim flange, when the tyre is mounted on the rim, is at least 3 mm.

Advantageously, a distance or offset of at least 3 mm is provided between radially inner and outer ends of the transponder and an adjacent tyre component, such as the turned-up end of the body ply, the radially outer end of the rim cushion, or a rim. A distance between the radially inner and outer ends of the transponder and the ends of a tyre component will reduce the risk of delamination and maintains durability of the tyre.

In embodiments, the turned-up portion of the body ply radially terminates below the tread ply in such a way that the end of the body ply is below the tread ply.

Optionally, the transponder in axial tyre direction on its axially inner side abuts and is in direct contact with the body ply.

In an embodiment, the transponder in axial tyre direction on its axially inner side abuts and is in direct contact with the body ply and optionally also on its axially outer side abuts and is in direct contact with the sidewall. In other words, the transponder in this position is embedded between the carcass turn-up and the sidewall around the medium portion of the section height. This position allows the transponder to be placed in a region without many geometric changes, providing a good stability for the transponder, in a low displacement region. This position further contributes to transponder readability being further away from the metal parts of bead core and rim flange.

In these embodiments of the assembly, the first radial distance (D 1) between the radially outer end of the transponder and the end of the body ply is in a range of from 3 mm to 10 mm, preferably in a range of from 5 mm to 10 mm. In these embodiments of the assembly, the second radial distance (D2) between the radially inner end of the transponder and the outer edge of the rim flange, when the tyre is mounted on the rim, is in a range of from more than 0 mm to 74 mm, preferably in a range of from 45 mm to 70 mm, further preferably in a range of from 55 mm to 70 mm, more preferably in a range of from 45 mm to 60 mm.

In another embodiment, the transponder in axial tyre direction on its axially inner side abuts and is in direct contact with the body ply and optionally also on its axially outer side abuts and is in direct contact with the rim cushion. In other words, the transponder in this position is embedded between the carcass turn-up and the rim cushion, preferably below the apex tip. This position guarantees a very stiff region of the tyre, with lowest displacements as possible, providing good transponder stability and tyre integrity.

In such embodiment of the assembly, the first radial distance (D1) between the radially outer end of the transponder and the end of the body ply is in a range of from 3 mm to 38 mm, preferably in a range of from 5 mm to 38 mm. In such embodiments of the assembly, the second radial distance (D2) between the radially inner end of the transponder and the outer edge of the rim flange, when the tyre is mounted on the rim, is in a range of from more than 0 mm to 45 mm, preferably in a range of from 0.5 mm to 35 mm, more preferably in a range of from 3 mm to 10 mm.

In embodiments of the assembly, at least one additional reinforcing layer is arranged at least between the turned-up portion of the body ply and the body ply of the tyre. In embodiments, one, two or more reinforcing layers can be arranged between the turned-up portion of the body ply and the body ply. The reinforcing layer may be a rubber layer. In embodiments, the reinforcing layer may comprise a rubber component layer and a textile reinforcing layer. In embodiments, the reinforcing layer may be a reinforcing body ply.

In embodiments of the pneumatic tyre and rim assembly, the transponder is arranged between a first and a second coating layer. The transponder in embodiments is arranged so as to be contained in a sandwich-like manner between first and a second outer rubber coating layers. First and a second outer rubber coating layers on the axially inner and outer surfaces may result in the transponder being completely or nearly completely surrounded by coating layers. The material of the coating layer may be a rubber component, optionally the rubber material of the belt compound. Such a rubber coating layer provides improved compatibility of the transponder with the surrounding tyre components, such as the sidewall rubber, the rim cushion rubber or the ply rubber component. The transponder being protected by the coating layer, allows the durability of the transponder to be improved. Such a coated transponder usually is referred to as a "pouch". Optionally the transponder is assembled on a support layer and the transponder assembly of transponder and support layer is arranged between first and second coating layers. The support layer may be a mesh having a textile component. The support layer will improve the stability of the transponder assembly.

In the following the invention is explained in detail by examples and with reference to the enclosed drawings showing preferred embodiments of the present invention, wherein each feature can constitute solely or in combination an aspect of the invention.

In the drawings:
- Fig. 1: schematically shows a section view of tyre illustrating two positions for placing transponders according to embodiments of the invention.
- Fig. 2: schematically shows a section view of tyre illustrating the positioning of a transponder according to an embodiment of the invention.
- Fig. 3: schematically shows a section view of tyre illustrating the positioning of a transponder according to another embodiment of the invention.
- Fig. 4: schematically shows a section view of tyre illustrating the positioning of a transponder according to an embodiment of the invention.
- Fig. 5: schematically shows a section view of a pneumatic tyre and rim assembly illustrating the positioning of a transponder according to an embodiment of the invention.

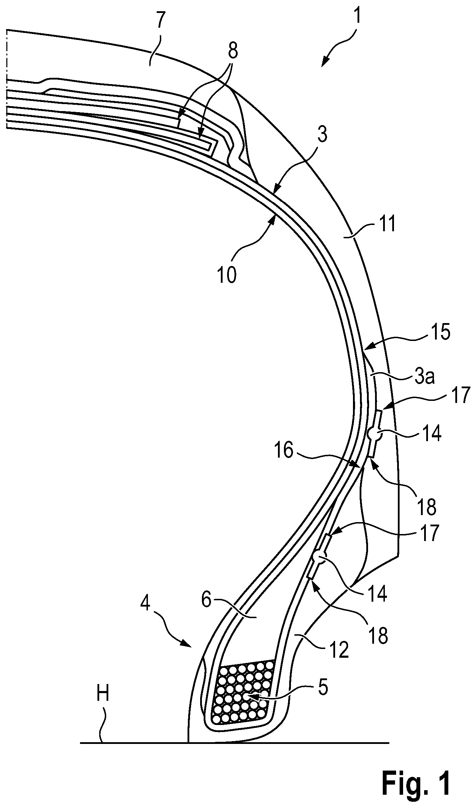

In Fig. 1, a pneumatic tyre 1 for mounting on a standard rim is shown. The tyre 1 comprises an annular tread 7 that extends in a tyre circumferential direction and provides a ground-contacting surface, and belt plies 8. The tyre 1 further comprises a pair of annular beads 4 each of which has a bead filler 6 and a bead core 5 that may comprise a bundle of steel wires coated with rubber buried therein, and a pair of sidewalls 11 extending between the tread 7 and the beads 4. A toroidal carcass is provided which extends between the pair of beads 4, the carcass comprising at least one body ply 3 which body ply 3 at each end portion is turned up around the respective bead 4 thereby forming a laterally turned-up portion 3a extending radially until an end 15 of the body ply 3. An inner liner 10 which is impermeable to air for retaining a pneumatic pressure is provided in an inner side of the carcass. In each bead, a rim cushion 12 is arranged externally to the body ply 3 and is provided in a portion where the bead 4 is to come into contact with a rim. In the embodiments illustrated in Fig. 1, transponders 14 having a radially outer end facing the tread 7 and a radially inner end facing the bead core 5 and an axially inner surface facing the body ply 3 are arranged in two exemplary positions in contact with the body ply 3 at the turned-up portion 3a. The transponder 14 may be placed in a radially outer position between the end 15 of the body ply 3a and the outer end 16 of the rim cushion12. In this outer position the transponder may be arranged in the tyre axial direction between the turned-up portion 3a of the body ply 3 and the sidewall 11. In embodiments, the transponders may be placed in a radially inner position between the outer end 16 of the rim cushion 12 and a radially innermost rim seating surface of the tyre (H). In this inner position, the transponder may be axially arranged such that the axially outer surface of the transponder 14 faces the rim cushion 12.

The rim cushion 12 has an outer end 16. The rim cushion 12 has a tapering portion ending in the outer end 16 and also the radially inner end portion narrows toward the bead core 5, while the middle portion of the rim cushion 12 has a wider thickness.

For each position of the transponder a first radial distance of at least 3 mm is provided between the radially outer end 17 of the transponder 14 and the end 15 of the body ply 3, and a second radial distance of at least 14.1 mm is provided between the radially inner end 18 of the transponder 14 and a radial height (H) corresponding to the radial innermost portion of a rim seating of the tyre.

During the manufacturing, the tyre is built in a first building step by providing the inner liner 11, a body ply 3, an assembly of rim cushion 12 and sidewalls 11, and an apex assembly comprising an apex and a bead core 5 are positioned. In a second building step the tyre is provided with the belt package and the tread. Between the first and second building steps, the transponders are sandwitched in position.

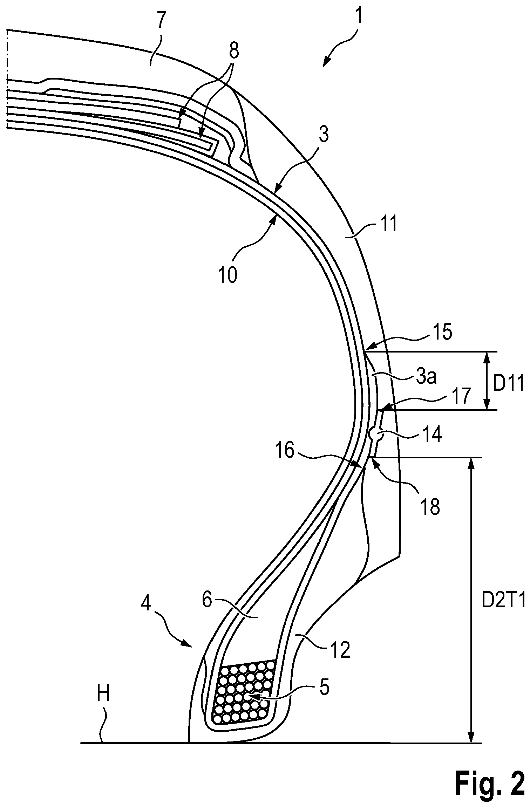

Fig. 2 illustrates in detail an embodiment where the transponder 14 in axial tyre direction on its axially inner side abuts and is in direct contact with the body ply 3 and on its axially outer side abuts and is in direct contact with the sidewall 11. The transponder 14 has a radially outer end 17 facing the tread 7 and a radially inner end 18 facing the bead core 5. In this embodiment, the radially inner end 18 of the transponder 14 is positioned near the radially outer end 16 of the rim cushion 12. This position provides a good stability in a low displacement region. A first radial distance D11 of at least 3 mm is provided between the radially outer end 17 of the transponder 14 and the end 15 of the body ply 3. A second radial distance D2T1 of at least 14.1 mm is provided between the radially inner end 18 of the transponder 14 and H corresponding to the radial innermost portion of a rim seating of the tyre. In this embodiment, the first radial distance D11 may be in a range of from 5 mm to 10 mm, and the second radial distance D2T1 may be in a range of from 30 mm to 74 mm.

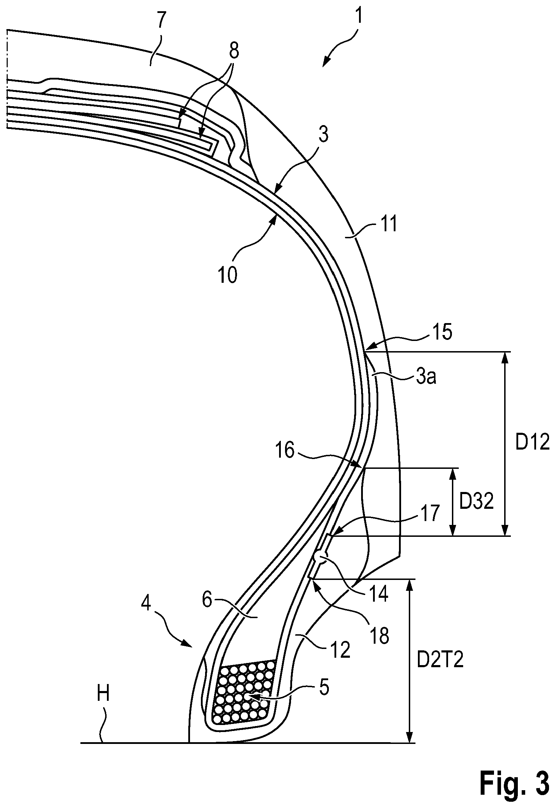

Fig. 3 illustrates in detail an embodiment where the transponder 14 in axial tyre direction on its axially inner side abuts and is in direct contact with the body ply 3 and on its axially outer side abuts and is in direct contact with the rim cushion 12. The transponder in this position is embedded between the carcass turn-up 3a and the rim cushion 12. The radially outer end 17 of the transponder 14 is distanced by a distance D32, which preferably is at least 3 mm, to the outer end 16 of the rim cushion 12. The first radial distance D12 between the radially outer end 17 of the transponder 14 and the end 15 of the body ply 3 is equal or more than 5 mm and the second radial distance D2T2 between the radially inner end 18 of the transponder 14 and the radial height H is at least 14.1 mm. In this embodiment, the first radial distance D12 may be in a range of from 5 mm to 38 mm, and the second radial distance D2T2 may be in a range of from 17.3 mm to 74 mm. The transponder thus may be positioned at a radial height of 3 mm or more from the outer end of the bead filler 6.

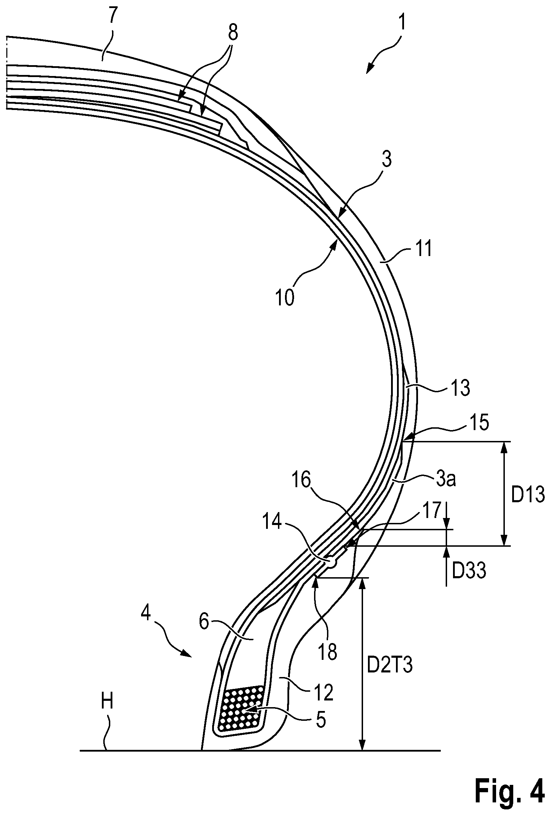

Fig. 4 illustrates an embodiment where the transponder 14 in axial tyre direction on its axially inner side abuts and is in direct contact with the turned-up portion 3a of the body ply 3 and on its axially outer side abuts and is in direct contact with the rim cushion 12. In this embodiment, the radially outer end 17 of the transponder 14 is distanced by a distance D33, which preferably is at least 3 mm, to the outer end 16 of the rim cushion 12. The first radial distance D13 between the radially outer end 17 of the transponder 14 and the end 15 of the body ply 3 is at least 3 mm and the second radial distance D2T3 between the radially inner end 18 of the transponder 14 and the radial height H is at least 40 mm. A reinforcing layer 13 is arranged between the turned-up portion 3a of the body ply 3 and the body ply 3. The reinforcing layer 13 may comprise a rubber component layer and a textile reinforcing layer. In embodiments, the reinforcing layer may be a reinforcing body ply.

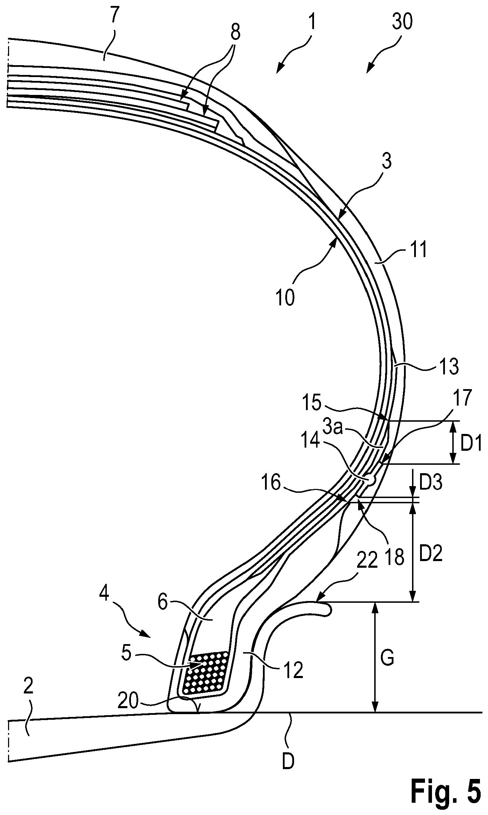

Fig. 5 illustrates a pneumatic tyre and rim assembly 30 comprising a tyre 1 mounted on a rim 2. The rim 2 has a rim seating having a diameter D and a dimension G of a rim contour measured radially from the rim seating 20 to an outer edge 22 of a rim flange. The tyre 1 comprises an annular tread 7 extending in a tyre circumferential direction, a pair of annular beads 4, each of which has a bead core 5 and a bead filler 6, a pair of sidewalls 11 extending between the tread 7 and the beads 4. A carcass is provided extending between the pair of beads 4, the carcass comprising at least one body ply 3 which body ply 3 at each end portion is turned up around the respective bead 4 thereby forming a laterally turned-up portion 3a extending radially until an end 15 of the body ply 3. A rim cushion 12 is arranged externally to the body ply 3 and is provided in a portion where the bead 4 comes into contact with the rim 2. A transponder 14 is arranged in contact with the body ply 3 at the turned-up portion 3a of the body ply 3. The transponder has a radially outer end 17 facing the tread 7 and a radially inner end 18 facing the bead core 5 and an axially inner surface facing the body ply 3 and an axially outer surface facing the sidewall 11. In radial tyre direction, the transponder 14 is located between the end 15 of the body ply 3 and the outer edge 22 of the rim flange and in tyre axial direction is arranged between the turned-up portion 3a of the body ply 3 and the sidewall 11. Thus, the transponder 14 in axial tyre direction on its axially inner side abuts and is in direct contact with the body ply 3 and on its axially outer side abuts and is in direct contact with the sidewall 11. A first radial distance D1 of at least 3 mm is provided between the radially outer end 17 of the transponder 14 and the end 15 of the body ply 3, and a second radial distance D2 of more than 0 mm is provided between the radially inner end 18 of the transponder 14 and the outer edge 22 of the rim flange, when the tyre 1 is mounted on the rim 2 under nominal load and with nominal inflation pressure. The radially inner end 18 of the transponder 14 is distanced by a distance D3, which preferably is at least 3 mm, to the outer end 16 of the rim cushion 12.

An example will be described below, but the present invention is not limited to the following example.

### Example 1: Endurance and readability testing of RFID tags in a tyre

RFID tags measuring 70 mm x 15 mm x 1 mm having a passive RFID transponder inductively coupled to an antenna made of a conductive stainless steel wire assembled on a support layer and sandwitched between a rubber coating layer were applied in contact with the body ply at the turned-up portion of prototype tyres of a size of 245/45R19 or 245/45R18 in a substantially circumferential direction, either at a position having first radial distance D1 of 10 mm between the radially outer end of the transponder and the end of the body ply and a second radial distance D2 of 32 mm between the radially inner end of the transponder and the outer edge of the rim flange, when the tyre was mounted on a 8.0Jx19'' rim under a base load of 834 daN for 245/45R19 or 800 daN for 245/45R18 and with a nominal inflation pressure of 34.8 PSI (= 2.4 bar), or at a position having a distance D1 of 38 mm and a distance D2 of 6 mm. Reference tyres were either equipped with RFID tags at a position between the inner liner and the body ply below the apex tip facing on the inside of the tyre or were run without RFID tag. The support layer of the RFID tags was made of a textile reinforcement material.

Endurance testing was performed on a DOT/ECE endurance machine, and variable settings were used to replicate driving conditions and align with real boundary conditions. The sequence of the test was 4 hours with a load percentage of 40% LI (load index) for warming up, 198 hours of 55% LI, 288 hours of 100% LI and 144 hours with 120% LI. The speed was maintained at 100 km/h, and inflation pressure at 2.4 bar for the tested size. Every 3 days, the tyres were stopped to be inspected and the tags were read. Endurance tests were stopped after 60.000 km, with no tyre failure. This represents a very high mileage that was considered more than sufficient.

Readability test performed with a scanner confirmed that only one out of the tested 32 RFID tags of the different suppliers was not readable at the end of the testing, which represents a 97% success rate. The signal strength indicator with the mounted tyre stayed at a very good level, providing a reading distance of a normal operative check, and when detached from the rim, an even greater reading distance suitable for logistics and warehouse management was seen.

Thus, the results show that the positions did not affect tyre performance in endurance tests, and also allowed very good readability even after very high mileage with high load. Further, the positioning complies with the manufacturing process and allowed for as little adaptation as possible in the tyre building.

### Reference signs:

- 1: pneumatic tyre
- 2: rim
- 3: body ply
- 3a: turned-up portion
- 4: bead
- 5: bead core
- 6: bead filler
- 7: tread
- 8: belt ply
- 10: inner liner
- 11: sidewall
- 12: rim cushion
- 13: reinforcing layer
- 14: transponder
- 15: end of body ply
- 16: outer end of rim cushion
- 17: radially outer end of transponder
- 18: radially inner end of transponder
- 20: rim seating
- 22: outer edge of rim flange
- 30: pneumatic tyre and rim assembly

## Claims

1. A pneumatic tyre (1) for mounting on a rim,
wherein the tyre comprises
an annular tread (7) extending in a tyre circumferential direction,
a pair of annular beads (4), each of which has a bead core (5) and a bead filler (6),
a pair of sidewalls (11) extending between the tread (7) and the beads (4),
a carcass extending between the pair of beads (4), the carcass comprising at least one body ply (3) which body ply (3) at each end portion is turned up around the respective bead (4) thereby forming a laterally turned-up portion (3a) extending radially until an end (15) of the body ply (3),
a rim cushion (12) that is arranged externally to the body ply (3) and is provided in a portion where the bead (4) comes into contact with the rim (2),
**characterized in that**
a transponder (14) having a radially outer end (17) facing the tread (7) and a radially inner end (18) facing the bead core (5) and an axially inner surface facing the body ply (3) and an axially outer surface facing the sidewall (11) or the rim cushion (12) in radial tyre direction is located between the end (15) of the body ply (3) and the bead core (5) and in tyre axial direction is arranged between the turned-up portion (3a) of the body ply (3) and the sidewall (11) or the rim cushion (12), wherein
a first radial distance (D1) of at least 3 mm is provided between the radially outer end (17) of the transponder (14) and the end (15) of the body ply (3), and a second radial distance (D2T) of at least 14.1 mm is provided between the radially inner end (18) of the transponder (14) and a radial height (H) corresponding to the radial innermost portion of a rim seating of the tyre.

2. The pneumatic tyre according to claim 1, wherein the first radial distance (D1) between the radially outer end (17) of the transponder (14) and the end (15) of the body ply (3) is at least 3 mm and the second radial distance (D2T) between the radially inner end (18) of the transponder (14) and the radial height (H) is at least 17.3 mm.

3. The pneumatic tyre according to claim 1 or 2, wherein the transponder (14) in axial tyre direction on its axially inner side abuts and is in direct contact with the body ply (3) and on its axially outer side optionally also abuts and is in direct contact with the sidewall (11).

4. The pneumatic tyre according to claim 1 or 2, wherein the transponder (14) in axial tyre direction on its axially inner side abuts and is in direct contact with the body ply (3) and on its axially outer side optionally also abuts and is in direct contact with the rim cushion (12).

5. The pneumatic tyre according to any one of claims 1 to 4, wherein at least one reinforcing layer (13) is arranged at least between the turned-up portion (3a) of the body ply (3) and the body ply (3).

6. The pneumatic tyre according to any one of claims 1 to 5, wherein the transponder (14) is arranged between a first and a second coating layer, where optionally the transponder (14) is assembled on a support layer and the transponder assembly of transponder (14) and support layer is arranged between the first and second coating layers.

7. A pneumatic tyre and rim assembly comprising:
a tyre (1) mounted on a rim (2), wherein
the rim (2) has a rim seating having a diameter D and a dimension G of a rim contour measured radially from the rim seating (20) to an outer edge (22) of a rim flange, and wherein
the tyre comprises
an annular tread (7) extending in a tyre circumferential direction,
a pair of annular beads (4), each of which has a bead core (5) and a bead filler (6),
a pair of sidewalls (11) extending between the tread (7) and the beads (4),
a carcass extending between the pair of beads (4), the carcass comprising at least one body ply (3) which body ply (3) at each end portion is turned up around the respective bead (4) thereby forming a laterally turned-up portion (3a) extending radially until an end (15) of the body ply (3),
a rim cushion (12) that is arranged externally to the body ply (3) and is provided in a portion where the bead (4) comes into contact with the rim (2),
the assembly being **characterized in that**
a transponder (14) having a radially outer end (17) facing the tread (7) and a radially inner end (18) facing the bead core (5) and an axially inner surface facing the body ply (3) and an axially outer surface facing the sidewall (11) or the rim cushion (12) in radial tyre direction is located between the end (15) of the body ply (3) and the bead core (5) and in tyre axial direction is arranged between the turned-up portion (3a) of the body ply (3) and the sidewall (11) or the rim cushion (12), wherein
a first radial distance (D1) of at least 3 mm is provided between the radially outer end (17) of the transponder (14) and the end (15) of the body ply (3), and
a second radial distance (D2) of more than 0 mm is provided between the radially inner end (18) of the transponder (14) and the outer edge (22) of the rim flange, when the tyre (1) is mounted on the rim (2) under nominal load and with nominal inflation pressure.

8. The pneumatic tyre and rim assembly according to claim 7, wherein the first radial distance (D1) between the radially outer end (17) of the transponder (14) and the end (15) of the body ply (3) is at least 3 mm, and the second radial distance (D2) between the radially inner end (18) of the transponder (14) and the outer edge (22) of the rim flange, when the tyre (1) is mounted on the rim (2), is at least 0.5 mm.

9. The pneumatic tyre and rim assembly according to claim 7 or 8, wherein the transponder (14) in axial tyre direction on its axially inner side abuts and is in direct contact with the body ply (3) and on its axially outer side optionally also abuts and is in direct contact with the sidewall (11).

10. The pneumatic tyre and rim assembly according to claim 7 or 8, wherein the transponder (14) in axial tyre direction on its axially inner side abuts and is in direct contact with the body ply (3) and on its axially outer side optionally also abuts and is in direct contact with the rim cushion (12).

11. The pneumatic tyre and rim assembly according to any one of claims 7 to 10, wherein the transponder (14) is arranged between a first and a second coating layer, where optionally the transponder (14) is assembled on a support layer and the transponder assembly of transponder (14) and support layer is arranged between first and second coating layers.
